(19) **Europäisches Patentamt**
**European Patent Office**
**Office européen des brevets**

(11) **EP 2 890 041 B1**

(12) **EUROPEAN PATENT SPECIFICATION**

(45) Date of publication and mention
of the grant of the patent:
**12.10.2016 Bulletin 2016/41**

(51) Int Cl.:
***H04L 9/06*** *(2006.01)* ***H04L 9/32*** *(2006.01)*

(21) Application number: **14191857.3**

(22) Date of filing: **05.11.2014**

(54) **Space division method, space division device, and space division program**

Raumteilungsverfahren, Raumteilungsvorrichtung und Raumteilungsprogramm

Procédé, dispositif et programme de division d'espace

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.12.2013 JP 2013260471**

(43) Date of publication of application:
**01.07.2015 Bulletin 2015/27**

(73) Proprietor: **FUJITSU LIMITED**
**Kawasaki-shi,**
**Kanagawa 211-8588 (JP)**

(72) Inventors:
• **Noma, Yui**
**Kanagawa, 211-8588 (JP)**
• **Konoshima, Makiko**
**Kanagawa, 211-8588 (JP)**

(74) Representative: **Hoffmann Eitle**
**Patent- und Rechtsanwälte PartmbB**
**Arabellastraße 30**
**81925 München (DE)**

(56) References cited:
• **Yui Noma ET AL: "Eclipse Hashing: Alexandrov Compactification and Hashing with Hyperspheres for Fast Similarity Search", , 15 June 2014 (2014-06-15), XP055190784, Retrieved from the Internet: URL:http://arxiv.org/abs/1406.3882**
• **KENGO TERASAWA ET AL: "Spherical LSH for Approximate Nearest Neighbor Search on Unit Hypersphere", 15 August 2007 (2007-08-15), ALGORITHMS AND DATA STRUCTURES; [LECTURE NOTES IN COMPUTER SCIENCE], SPRINGER BERLIN HEIDELBERG, BERLIN, HEIDELBERG, PAGE(S) 27 - 38, XP019097380, ISBN: 978-3-540-73948-7 * section 3 ***
• **KENGO TERASAWA ET AL: "Approximate Nearest Neighbor Search for a Dataset of Normalized Vectors", IEICE TRANSACTIONS ON INFORMATION AND SYSTEMS, vol. E92-D, no. 9, 1 January 2009 (2009-01-01), pages 1609-1619, XP055190861, ISSN: 0916-8532, DOI: 10.1587/transinf.E92.D.1609**
• **J JI ET AL: "Super-bit locality-sensitive hashing", NONE, 6 December 2012 (2012-12-06), XP055190897,**
• **JAE-PIL HEO ET AL: "Spherical hashing", COMPUTER VISION AND PATTERN RECOGNITION (CVPR), 2012 IEEE CONFERENCE ON, IEEE, 16 June 2012 (2012-06-16), pages 2957-2964, XP032232423, DOI: 10.1109/CVPR.2012.6248024 ISBN: 978-1-4673-1226-4**

**EP 2 890 041 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

FIELD

The embodiments discussed herein are directed to space division methods, etc.

BACKGROUND

For example, when authenticating a user for various systems, a process is performed for obtaining biological information of the user and determining whether or not biological information that matches the obtained biological information exists in a pre-registered database. Now, a similarity search is effective because biological information obtained at the time of authentication hardly matches completely with the biological information obtained at the time of registration.

As to representation of the degree of similarity when performing a similarity search, there is a technique for converting feature values of biological information into a hash vector so that biological information for which the hamming distance between their hash vectors is short are specified as similar biological information.

With conventional techniques, feature values are converted into a hash vector by using a hyper-plane, but there are also processes where feature values are converted into a hash vector by using a hyper-sphere, and improvements to the precision can be better expected when a hyper-sphere is used.

Patent Literature 1: Japanese Laid-open Patent Publication No. 10-247243
Patent Literature 2: Japanese Laid-open Patent Publication No. 2012-160047
Patent Literature 3: Japanese Laid-open Patent Publication No. 2011-100395
Patent Literature 4: Japanese Laid-open Patent Publication No. 2010-81251
Patent Literature 5: Japanese Laid-open Patent Publication No. 2012-243197
Non Patent Literature 1: Jae-Pil Heo, Youngwoon Lee, Junfeng He, Shih-Fu Chang, and Sung-Eui Yoon. "Spherical hashing", In CVPR, pp. 2957-2964, 2012.
Non Patent Literature 2: Kengo Terasawa and Yuzuru Tanaka. "Spherical lsh for approximate nearest neighbor search on unit hyper-sphere", In Frank K. H. A. Dehne, Jorg-Rudiger Sack, and Norbert Zeh, editors, WADS, Vol. 4619 of Lecture Notes in Computer Science, pp. 27-38. Springer, 2007.

With conventional techniques, however, a similarity search using hash vectors are not performed with a high precision.

For example, when feature vectors are converted into hash vectors by using a hyper-sphere, there are cases where the hamming distance after the conversion into hash vectors may turn out to be small for feature vectors that are significantly different from each other, due to an influence of a worm hole. Therefore, different feature vectors may be determined erroneously as being similar feature vectors.

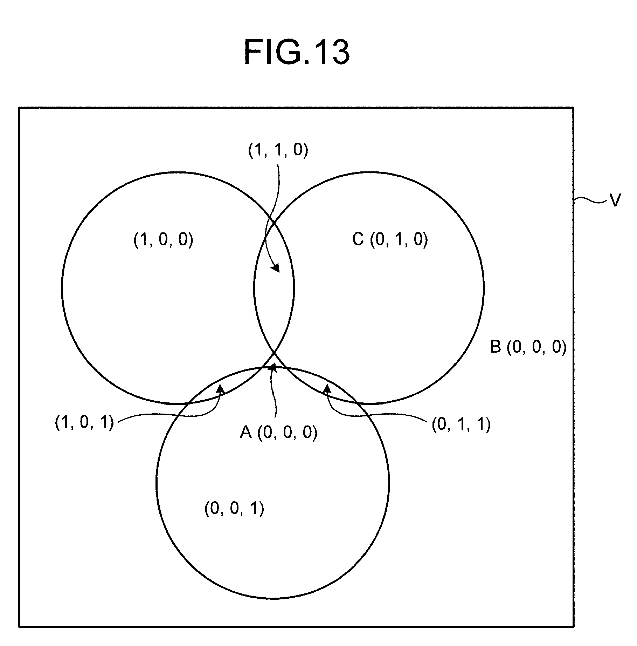

Now, a worm hole will be described. FIGS. 13 to 15 are diagrams illustrating a worm hole. For example, consider dividing an m-dimensional feature space V by using a hyper-sphere into areas, and assigning each area a bit string depending on whether the area is inside or outside the hyper-sphere. Depending on the placement of the hyper-sphere, area A and area B, not connected to each other, may have the same bit string (0,0,0), as illustrated in FIG. 13.

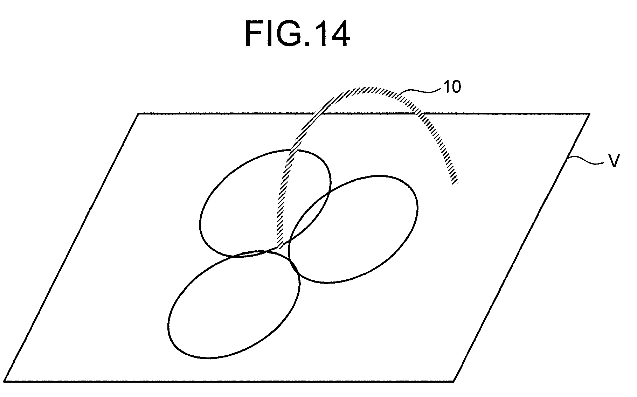

Where the phenomenon illustrated in FIG. 13 occurs, when one evaluates the similarity between feature vectors on the basis of the hamming distance between bit strings assigned to the feature vectors, the hamming distance may turn out to be small even if the feature vectors are significantly apart from each other. In order to understand this non-connectivity, one can assume a tube 10 connecting between area A and area B, as illustrated in FIG. 14. This tube is named "a worm hole" after a particular solution of general relativity.

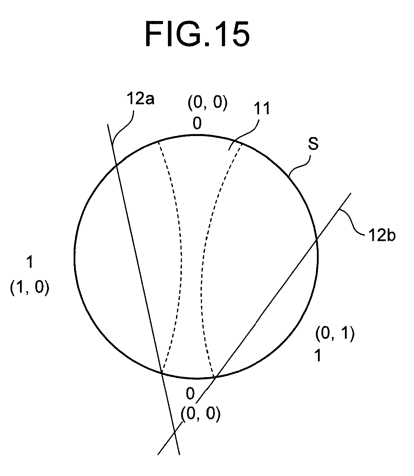

FIG. 15 illustrates non-connected areas occurring when dividing one-dimensional feature space into areas by using the hyper-sphere S, and a worm hole 11 connecting between the areas. The hyper-sphere S is divided into areas by hyper-planes 12a and 12b. For example, an area on the left side of the hyper-plane 12a is assigned "1" in its first bit, and an area on the right side of the hyper-plane 12a is assigned "0" in its first bit. An area on the right side of the hyper-plane 12b is assigned "1" in its second bit, and an area on the left side of the hyper-plane 12b is assigned "0" in its second bit. Then, the vicinity of the south pole and the vicinity of the north pole of FIG. 15 are assigned the same bit string (0,0) even though they are not connected to each other. This is because of the worm hole 11 connecting between the vicinity of the south pole and the vicinity of the north pole of the hyper-sphere S.

Accordingly, it is an object in one aspect of an embodiment of the invention to provide a space division method, a space division device, and a space division program, with which it is possible to perform a similarity search using feature vectors with a high precision.

SUMMARY

The present invention provides a space division method according to Claim 1.

The present invention also provides a space division device according to Claim 3.

The present invention also provides a space division program according to Claim 5.

According to an embodiment, a space division method includes specifying an intersection position of a plurality of hyper-planes such that the intersection position is present within a sphere, when the plurality of hyper-planes are placed so as to divide the sphere present in a space of a dimension higher than a dimension of a feature space by one dimension or more; and initially placing the plurality of hyper-planes passing through the set intersection position.

BRIEF DESCRIPTION OF DRAWING(S)

FIG. 1 is a functional block diagram illustrating a configuration of a search device according to the present embodiment.

FIG. 2 illustrates an example data structure of a feature value storage unit;

FIG. 3 illustrates an example data structure of a bit string storage unit;

FIG. 4 is a first diagram illustrating a relationship between a feature space V and a hyper-sphere S;

FIG. 5 is a second diagram illustrating a relationship between a feature space V and a hyper-sphere S;

FIG. 6 illustrates an example of an approximate straight line;

FIG. 7 is a diagram illustrating an example of a radius of a circular image obtained by a stereographic projection of the equator of the hyper-sphere S;

FIG. 8 is a flow chart illustrating a procedure of a search device according to the present embodiment;

FIG. 9 is a flow chart illustrating a procedure of a process of setting initial positions of hyper-planes;

FIG. 10 is a diagram illustrating an advantageous effect of a search device according to the present embodiment;

FIG. 11 is a flow chart illustrating a procedure of a process of setting other initial positions of hyper-planes;

FIG. 12 is a diagram illustrating an example computer executing a space division program;

FIG. 13 is a first diagram illustrating a worm hole;

FIG. 14 is a second diagram illustrating a worm hole;

and

FIG. 15 is a third diagram illustrating a worm hole.

DESCRIPTION OF EMBODIMENTS

Preferred embodiments of the present invention will be explained with reference to accompanying drawings. Note that the embodiments are not to limit the scope of the present invention.

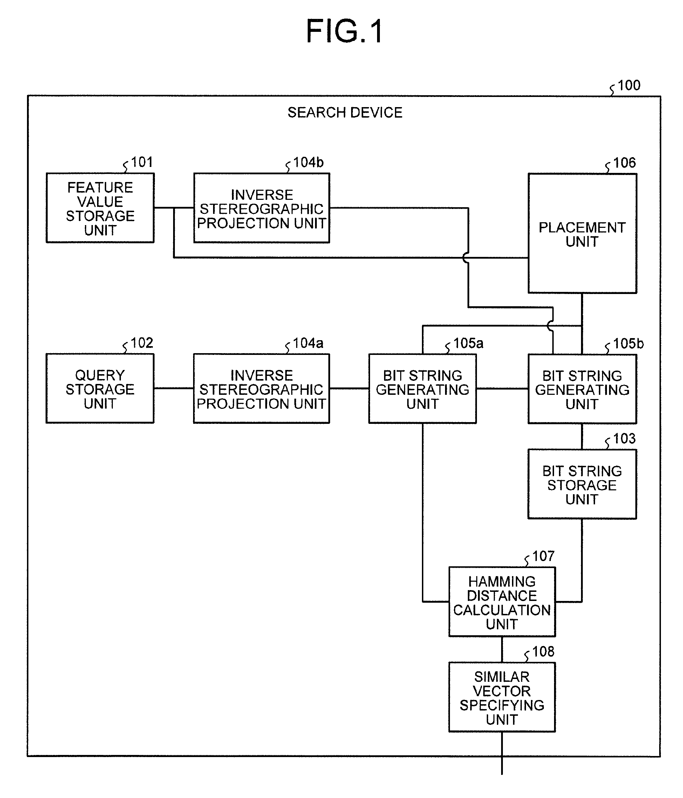

An example configuration of a search device according to Embodiment 1 will be described. The search device is an example of the space division device. FIG. 1 is a functional block diagram illustrating a configuration of a search device according to the present embodiment. As illustrated in FIG. 1, a search device 100 includes a feature value storage unit 101, a query storage unit 102, a bit string storage unit 103, inverse stereographic projection units 104a and 104b, and bit string generating units 105a and 105b. The search device 100 also includes a placement unit 106, a hamming distance calculation unit 107, and a similar vector specifying unit 108.

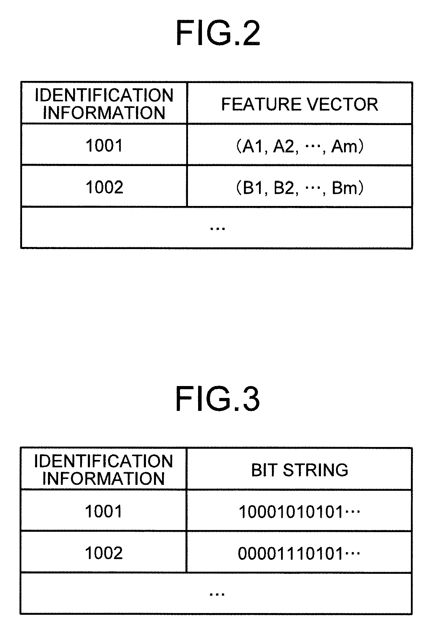

The feature value storage unit 101 is a storage unit for storing a plurality of feature vectors. FIG. 2 illustrates an example data structure of the feature value storage unit. As illustrated in FIG. 2, the feature value storage unit 101 stores identification information and feature vectors so that they are associated with each other. The identification information is information for uniquely specifying a feature vector. A feature vector is, for example, data of an $m$-dimensional feature value obtained from biological information of a user. Any of conventional techniques may be used as a method for obtaining a feature vector from biological information. For example, $m$ is an integer of 1 or more.

The query storage unit 102 is a storage unit for storing a query feature vector. The search device 100 searches through the feature value storage unit 101 for a feature vector that is similar to the query feature vector.

The bit string storage unit 103 is a storage unit for storing bit strings obtained from a bit string generating unit 105 to be described later. FIG. 3 illustrates an example data structure of a bit string storage unit. As illustrated in FIG. 3, the bit string storage unit 103 stores identification information and bit strings so that they are associated with each other. The identification information is information for uniquely specifying the feature vector from which the bit string is generated. The bit string is a bit string that is generated on the basis of a feature vector.

The inverse stereographic projection units 104a and 104b are processing units for subjecting the $m$-dimensional feature space V to an inverse stereographic projection so that the feature space V is associated with the $(m+p-1)$-dimensional hyper-sphere S, which is embedded in a space W of which the number of dimensions is higher than m by p. Here, p is an integer of 1 or more. In the following description, the inverse stereographic projection units 104a and 104b may be referred to collectively as an inverse stereographic projection unit 104.

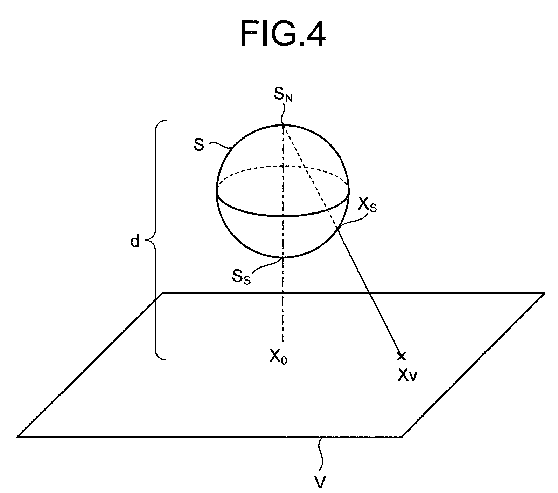

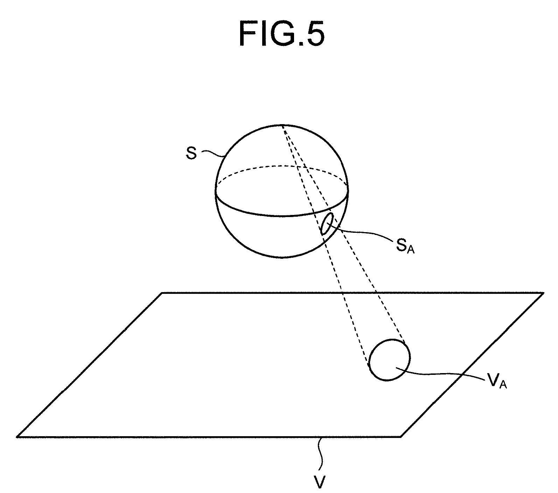

FIGS. 4 and 5 are diagrams each illustrating a relationship between the feature space V and the hyper-sphere S. Through an inverse stereographic projection, a point on the feature space V is associated with a point on the hyper-sphere S, as illustrated in FIG. 4. In the example illustrated in FIG. 4, a point $x_V$ on the feature space V is associated with a point $x_S$ on the hyper-sphere S. The intersection between the feature space V and the straight line extending between the north pole $S_N$ and the south pole $S_S$ of the hyper-sphere S is defined as $x_0$. For example, a set of coordinates for the north pole $S_N$ is ($x_{S1}$, $x_{S2}$, ... , $x_{Sm}$, 1), and a set of coordinates for the south pole is ($X_{S1}$, $X_{S2}$, ... , , $X_{Sm}$, -1).

The height from the feature space V to the north pole $S_N$ of the hyper-sphere S is defined as d. The intersection between the straight line passing through the north pole $S_N$ and the point $x_V$ and the surface of the hyper-sphere S corresponds to $x_S$. For example, a cross section $S_A$ of the hyper-sphere S corresponds to an area $V_A$ of the feature space V, as illustrated in FIG. 5.

Now, an inverse stereographic projection is the inverse of a stereographic projection. Where the hyper-sphere S and the feature space V are arranged with a straight line extending from the north pole $S_N$ to intersect with the hyper-sphere S, as illustrated in FIG. 4, a stereographic projection is defined as a mapping from the intersection $x_S$ between the hyper-sphere S and the straight line onto the intersection $x_V$ between the straight line and the feature space V. Note that the example illustrated in FIG. 4 represents a case where the value of p is 1.

It is assumed that where the feature vector (coordinate set) of the feature space V is ($x_1$, $x_2$, ... , $x_m$), the inverse stereographic projection "$f^{-1}:V \rightarrow U$" is as expressed in Expression (1) below. Note however that $r^2$ in Expression (1) is defined as in Expression (2).

$$f^{-1}\left(x_1, \cdots, x_m\right) = \left(\frac{2d(x_1 - x_{o1})}{d^2 + r^2} + x_{o1}, \cdots, \frac{2d(x_m - x_{om})}{d^2 + r^2} + x_{om}, \frac{-d^2 + r^2}{d^2 + r^2}\right)$$

$$(1)$$

$$r^2 = \sum_{i=1}^{m}\left(x_i - x_{oi}\right)^2 \qquad (2)$$

In Expressions (1) and (2), $x_0$ and d are parameters. The parameters $x_0$ and d correspond to $x_0$ and d illustrated in FIG. 4. The parameter $x_0$ is a coordinate of a point on the feature space V mapped onto the south pole $S_S$ of the hyper-sphere S. The parameter d is a parameter for adjusting the scale of stereographic projection, and corresponds to the radius of the hyper-sphere S when the equator of the hyper-sphere S is mapped onto the feature space V. Note that a set of coordinates for the equator of the hyper-sphere S is ($x_{S1}$, $x_{S2}$, ... , $x_{Sm}$, 0).

The inverse stereographic projection unit 104 performs an inverse stereographic projection of the feature vector on the basis of the specified parameters $x_0$ and d, and Expression (1). Note that the inverse stereographic projection unit 104 may have the information of the parameter $x_0$ and the parameter d pre-stored therein.

The inverse stereographic projection unit 104a performs an inverse stereographic projection on the basis of a feature vector stored in the query storage unit 102 and Expression (1), thereby calculating a set of coordinates on the hyper-sphere S corresponding to the feature vector. The inverse stereographic projection unit 104a outputs the calculated set of coordinates to the bit string generating unit 105a.

The inverse stereographic projection unit 104b performs an inverse stereographic projection on the basis of the feature vectors stored in the feature value storage unit 101 and Expression (1), thereby calculating a plurality of sets of coordinates on the hyper-sphere S corresponding to the respective feature vectors. The inverse stereographic projection unit 104b outputs the calculated sets of coordinates to the bit string generating unit 105b.

The bit string generating units 105a and 105b are processing units for converting a set of coordinates on the hyper-sphere S into a bit string in accordance with a conversion rule. The bit string corresponds to a hash vector. In the following description, the bit string generating units 105a and 105b may be referred to collectively as the bit string generating unit 105. The bit string generating unit 105 is an example of the generating unit.

In Expression (3), the information of the $n \times (m+1)$ matrix "$W_{11}$, $W_{12}$, ... , $W_{n(m+1)}$" and the information of $n \times 1$ "$c_1$, $c_2$, ... , $c_n$" are a conversion rule. The bit string generating unit 105 obtains the conversion rule from the placement unit 106 to be described later. In Expression (3), the information "$x_1$, $x_2$, ... , $x_{m+1}$" is a set of coordinates on the hyper-sphere S.

$$n\begin{cases} \begin{bmatrix} \overbrace{\begin{matrix} w_{11} & w_{12} & w_{13} & w_{14} & \cdots & w_{1(m+1)} \\ w_{21} & w_{22} & w_{23} & \cdots & & \\ w_{31} & \cdots & & & & \\ \cdots & & & & & \\ w_{n1} & & & & & w_{n(m+1)} \end{matrix}}^{m+1} \end{bmatrix} \end{cases} \begin{bmatrix} x_1 \\ x_2 \\ \vdots \\ x_m \\ x_{m+1} \end{bmatrix} + \begin{bmatrix} c_1 \\ c_2 \\ \vdots \\ c_n \end{bmatrix} = \begin{bmatrix} b_1 \\ b_2 \\ \vdots \\ b_n \end{bmatrix} \quad (3)$$

The bit string generating unit 105 calculates "$b_1, b_2, b_3, \ldots, b_n$" by solving Expression (3). For example, the bit string generating unit 105 calculates $b_N$ as illustrated in Expression (4) below.

$$b_N = (W_{N1} \times x_1 + W_{N2} \times x_2 + \ldots + W_{N,m+1} \times x_{m+1}) + c_N \quad (4)$$

After calculating "$b_1, b_2, b_3, \ldots, b_n$," the bit string generating unit 105 converts $b_N$ to "1" if the value of $b_N$ is positive and converts $b_N$ to "0" if the value of $b_N$ is not positive, thereby calculating a bit string. For example, where the values of "$b_1, b_2, b_3, \ldots, b_n$" are positive, negative, positive, ... , positive, respectively, the bit string generating unit 105 generates a bit string "1, 0, 1, ... , 1. "

The bit string generating unit 105a generates a bit string on the basis of a set of coordinates obtained from the inverse stereographic projection unit 104a, and outputs the generated bit string to the hamming distance calculation unit 107.

The bit string generating unit 105b generates a plurality of bit strings on the basis of sets of coordinates obtained from the inverse stereographic projection unit 104b, and outputs the generated bit strings to the bit string storage unit 103.

The placement unit 106 is a processing unit for placing, in the hyper-sphere S, n hyper-planes across the (m+p-1)-dimensional hyper-sphere S. The placement unit 106 also generates a conversion rule on the basis of the results of the placement. Hereinafter, the process by which the placement unit 106 specifies initial placements of the respective hyper-planes will be described, and then the process by which the placement unit 106 generates the conversion rule will be described.

The process by which the placement unit 106 specifies initial placements of the respective hyper-planes will now be described. The placement unit 106 obtains feature vectors from the feature value storage unit 101, and calculates the square root of the eigenvalue of the variance-covariance matrix for each feature vector. The placement unit 106 specifies, as $\sigma$, the largest one of the eigenvalues. The placement unit 106 also defines the direction of the specified $\sigma$ as "vecN."

The placement unit 106 calculates, as v, the third-order moment in the vecN direction. For example, the placement unit 106 calculates the third-order moment on the basis of Expression (5) below. In Expression (5), $x_i^{(k)}$ corresponds to the $i^{th}$ bit of the k-th feature vector, u corresponds to the average value of the feature vectors, and K corresponds to the number of the feature vectors.

$$v = \frac{1}{K} \sum_{k=1}^{K} \sum_{i=1}^{m} \left( vecN_i \cdot (x_i^{(k)} - u_i) \right)^3$$

$$(5)$$

Then, the placement unit 106 performs a principal component analysis on the feature vector, and calculates the cumulative contribution ratio. For example, the placement unit 106 performs a principal component analysis so as to obtain the spreads of the first to $N^{th}$ principal components. The placement unit 106 arranges the spreads of the respective principal components in a descending order to denote the principal components as $\sigma 1, \sigma 2, \ldots, \sigma N$, starting from one with the largest spread. The placement unit 106 calculates $\lambda$ on the basis of Expression (6) below. The placement unit 106 also calculates the cumulative contribution ratio $\lambda_m$ on the basis of Expression (7) below.

$$\lambda = \sum_{i=1}^{m} \sigma_i \qquad\qquad (6)$$

$$\lambda_n = \sum_{i=1}^{n} \frac{\sigma_i}{\lambda} \qquad\qquad (7)$$

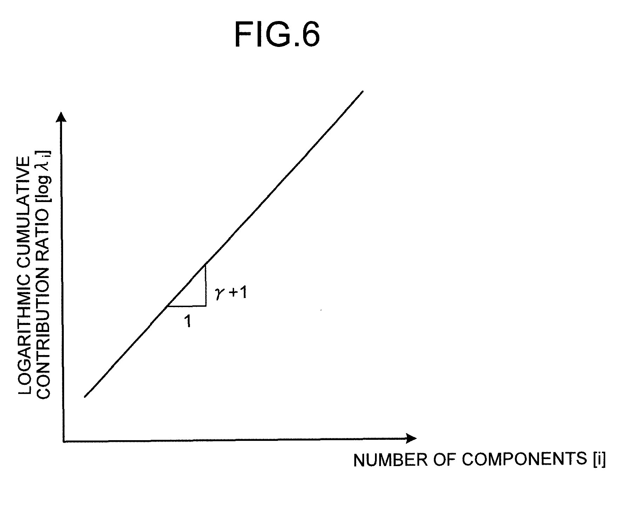

On a graph of which the horizontal axis represents the number "i" of components and the vertical axis represents the logarithmic cumulative contribution ratio "$\log\lambda_i$," the placement unit 106 plots the relationship between i and $\log\lambda_i$, thereby specifying an approximate straight line from the results of plotting. For example, the placement unit 106 specifies the approximate straight line by using the least squares method, or the like. FIG. 6 illustrates an example of an approximate straight line. The placement unit 106 calculates while using "$\gamma + 1$" as the gradient of the approximate straight line.

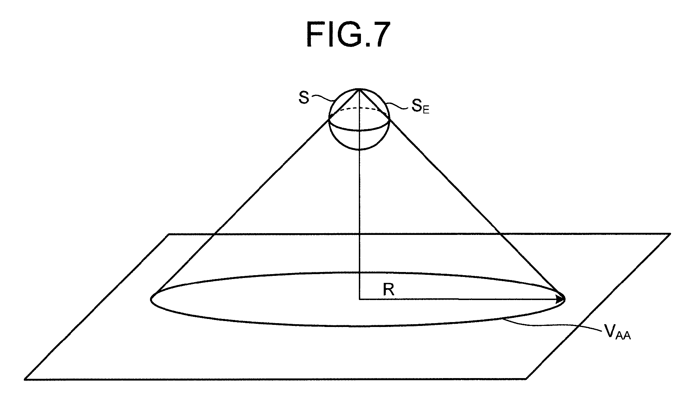

The placement unit 106 denotes, as R, the radius of a circular image obtained by a stereographic projection of the equator of the hyper-sphere S. FIG. 7 is a diagram illustrating an example of the radius of a circular image obtained by a stereographic projection of the equator of the hyper-sphere S. As illustrated in FIG. 7, the circular image obtained by a stereographic projection of the equator $S_E$ of the hyper-sphere S is $V_{AA}$. Then, the radius of the circle $V_{AA}$ is R.

The placement unit 106 calculates c1 on the basis of Expression (8), and c2 on the basis of Expression (9).

$$\text{c1} = (2/(1 + \exp(\sigma/((\gamma + 1)R)))) - 1 \qquad (8)$$

$$\text{c2} = \text{sgn}(\nu)|\nu|^{1/3}/R \qquad\qquad (9)$$

The placement unit 106 sets the position of a common intersection among hyper-planes to be a position shifted from the center of the hyper-sphere S by c1 in the m+1-dimensional direction and by c2 in the vecN direction. The placement unit 106 also samples n normal vectors from the multi-dimensional standard normal distribution. The placement unit 106 sets, as an initial position, a hyper-plane having the sampled normal vectors and passing through the common intersection.

Next, the process by which the placement unit 106 generates the conversion rule will be described. The placement unit 106 generates information of the conversion rule on the basis of information of the normal vector of the hyper-plane and the offset amount of the hyper-plane. The placement unit 106 generates the information of the $n \times (m+1)$ matrix "$W_{11}, W_{12}, \ldots, W_{n(m+1)}$" by arranging the n normal vectors. For example, each row of the $n \times (m+1)$ matrix of Expression (3) corresponds to a normal vector. Note that the placement unit 106 assigns a random value to any missing dimension in the information of the $n \times (m+1)$ matrix. The placement unit 106 also generates offset coordinates as information of $n \times 1$.

The placement unit 106 outputs the information of the $n \times (m+1)$ matrix and the information of $n \times 1$ to the bit string generating unit 105.

The hamming distance calculation unit 107 is a processing unit for calculating the hamming distance between the bit string obtained from the bit string generating unit 105a and each of the bit strings stored in the bit string storage unit 103. A hamming distance obtained from a comparison between two binary values having the same number of digits is the number of digits for which the binary values differ from each other. In the following description, the bit string obtained from the bit string generating unit 105a is denoted as a query bit string.

The hamming distance calculation unit 107 outputs, to the similar vector specifying unit 108, the calculated hamming distance between the query bit string and each of the bit strings from the bit string storage unit 103.

The similar vector specifying unit 108 obtains the calculated hamming distances from the hamming distance calculation unit 107, and ranks the bit strings in an ascending order of the hamming distance with respect to the query bit string. The similar vector specifying unit 108 may output the highest-ranked bit string among the ranked bit strings as the bit string corresponding to the query bit string, or may output the ranking results.

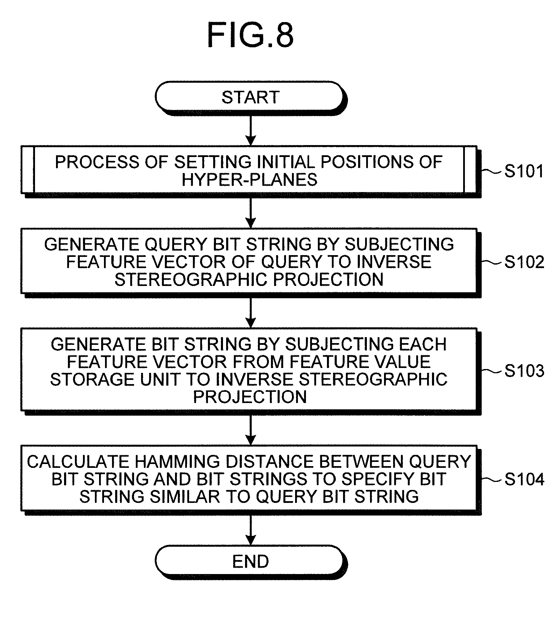

Next, an example procedure of the search device 100 according to the present embodiment will be described. FIG. 8 is a flow chart illustrating a procedure of a search device according to the present embodiment. The placement unit 106 of the search device 100 performs the process of setting initial positions of hyper-planes (step S101), as illustrated in FIG. 8.

The inverse stereographic projection unit 104a of the search device 100 subjects the feature vector of the query to an inverse stereographic projection, thereby generating the query bit string (step S102). The inverse stereographic projection unit 104b subjects feature vectors from the feature value storage unit 101 to an inverse stereographic projection, thereby generating bit strings (step S103).

The hamming distance calculation unit 107 of the search device 100 calculates the hamming distance between the query bit string and the bit strings from the bit string storage unit 103, and the similar vector specifying unit 108 specifies a bit string that is similar to the query bit string (step S104).

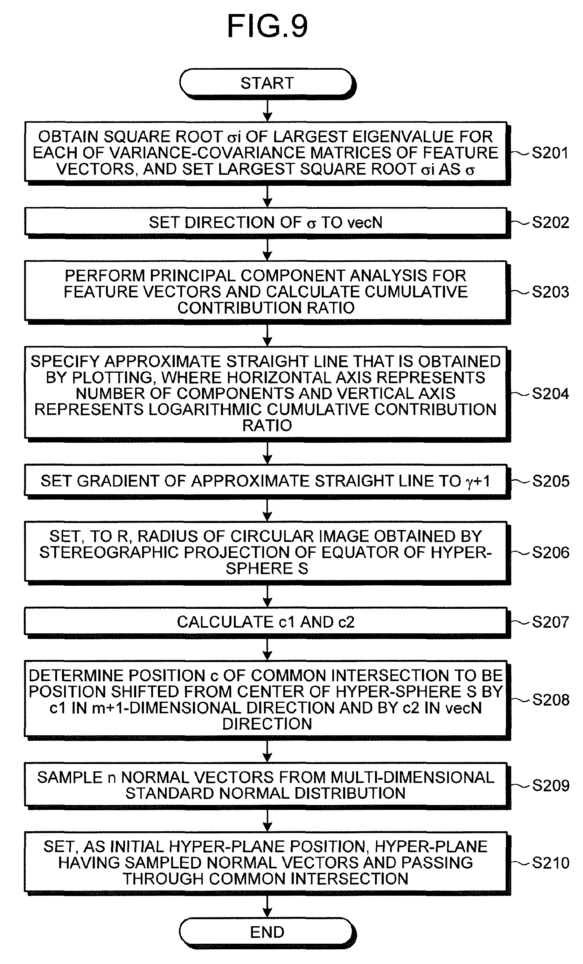

Next, the process of setting initial positions of hyper-planes in step S101 of FIG. 8 will be described. FIG. 9 is a flow chart illustrating a procedure of a process of setting initial positions of hyper-planes. The placement unit 106 obtains the square root $\sigma i$ of the largest eigenvalue for each of the variance-covariance matrices of the feature vectors, and sets the largest one of the square roots $\sigma i$ as $\sigma$, as illustrated in FIG. 9 (step S201).

The placement unit 106 sets the direction of $\sigma$ to vecN (step S202). The placement unit 106 performs a principal component analysis for the feature vectors and calculates the cumulative contribution ratio (step S203). The placement unit 106 specifies an approximate straight line that is obtained as a result of plotting, where the horizontal axis represents the number of components and the vertical axis represents the logarithmic cumulative contribution ratio (step S204).

The placement unit 106 sets the gradient of the approximate straight line to $\gamma+1$ (step S205). The placement unit 106 sets, to R, the radius of a circular image obtained by a stereographic projection of the equator of the hyper-sphere S (step S206).

The placement unit 106 calculates c1 and c2 (step S207). For this step, the placement unit 106 calculates c1 and c2 on the basis of Expressions (8) and (9).

The placement unit 106 determines the position c of the common intersection to be a position shifted from the center of the hyper-sphere S by c1 in the m+1-dimensional direction and by c2 in the vecN direction (step S208).

The placement unit 106 samples n normal vectors from the multi-dimensional standard normal distribution (step S209). The placement unit 106 sets, as an initial hyper-plane position, a hyper-plane having the sampled normal vectors and passing through the common intersection (step S210).

Next, the advantageous effects of the search device 100 according to the present embodiment will be described. When specifying a bit string through an inverse stereographic projection of a feature vector onto a hyper-sphere divided into areas by a plurality of hyper-planes, the search device 100 sets the initial positions of the hyper-planes so that the intersections of the hyper-planes are contained within the hyper-sphere S. Thus, by setting the initial positions of the hyper-planes so that the intersections of the hyper-planes are contained within the hyper-sphere, it is possible to prevent the occurrence of a worm hole, thereby eliminating instances where the hamming distance after the conversion into hash vectors turns out to be small for feature vectors that are significantly different from each other. Therefore, with the search device 100, it is possible to perform a similarity search using feature vectors with a high precision.

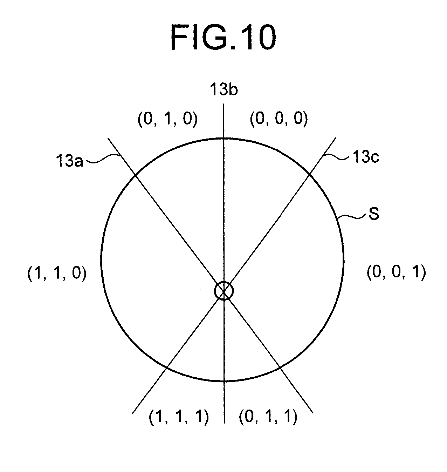

FIG. 10 is a diagram illustrating an advantageous effect of a search device according to the present embodiment. In the example illustrated in FIG. 10, the intersection between hyper-planes 13a, 13b and 13c is present within the hyper-sphere S. Thus, there is no worm hole, and it is possible to solve the problem where feature vectors that are significantly apart from each other may be assigned the same bit string, as illustrated in FIG. 15.

Now, the process by which the placement unit 106 sets the initial positions of hyper-planes is not limited to the process described above. Another process by which the placement unit 106 sets the initial positions of hyper-planes will be described below.

The placement unit 106 samples n normal vectors and offsets from the standard normal distribution, and determines the placement of the n hyper-planes on the basis of the sampled normal vectors and offsets. If an intersection for the n hyper-planes exists at the point at infinity, the placement unit 106 performs the sampling again to determine the placement of the n hyper-planes.

If the intersection is not present at the point at infinity for the n hyper-planes, the placement unit 106 determines whether or not the intersections are all present within the hyper-sphere S. If not all of the intersections are present within the hyper-sphere S, the placement unit 106 reduces in half the offsets of the n hyper-planes, and determines again whether or not the intersections are all present within the hyper-sphere S.

If the intersections are all present within the hyper-sphere S, the placement unit 106 specifies, as initial positions, the current positions of the hyper-planes.

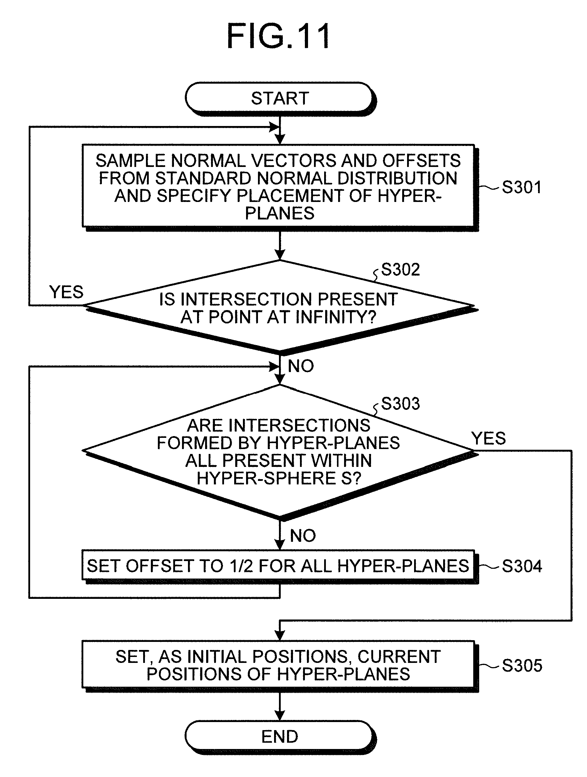

FIG. 11 is a flow chart illustrating a procedure of a process of setting other initial positions of hyper-planes. As illustrated in FIG. 11, the placement unit 106 samples normal vectors and offsets from the standard normal distribution, specifies the placement of the hyper-planes (step S301), and determines whether or not an intersection is present at the point at infinity (step S302). If an intersection is present at the point at infinity (Yes in step S302), the placement unit 106 proceeds to step S301.

On the other hand, if no intersection is present at the point at infinity (No in step S302), the placement unit 106 determines whether or not the intersections formed by the hyper-planes are all present within the hyper-sphere S (step S303). If not all of the intersections formed by the hyper-planes are present within the hyper-sphere S (No in step S303), the placement unit 106 reduces the offsets of all the hyper-planes to 1/2 (step S304), and proceeds to step S303.

On the other hand, if the intersections formed by the hyper-planes are all present within the hyper-sphere S (Yes step S303), the placement unit 106 sets, as initial positions, the current positions of the hyper-planes (step S305).

As the placement unit 106 specifies the initial positions of the hyper-planes as described above, the intersections of the hyper-planes are contained within the hyper-sphere S, and it is possible to prevent the occurrence of a worm hole, thereby eliminating instances where the hamming distance after the conversion into hash vectors turns out to be small for feature vectors that are significantly different from each other. Therefore, with the search device 100, it is possible to perform a similarity search using feature vectors with a high precision.

The embodiment described above is directed to a case where an inverse stereographic projection is performed on a hyper-sphere S that is present in the space of a dimension higher than the dimension of the feature space V by one dimension, but the present invention is not limited thereto. The present invention is similarly applicable to cases where an inverse stereographic projection is performed on an m-dimensional sphere that is present in the space of a dimension higher than the dimension of the feature space V by two or more dimensions, for example.

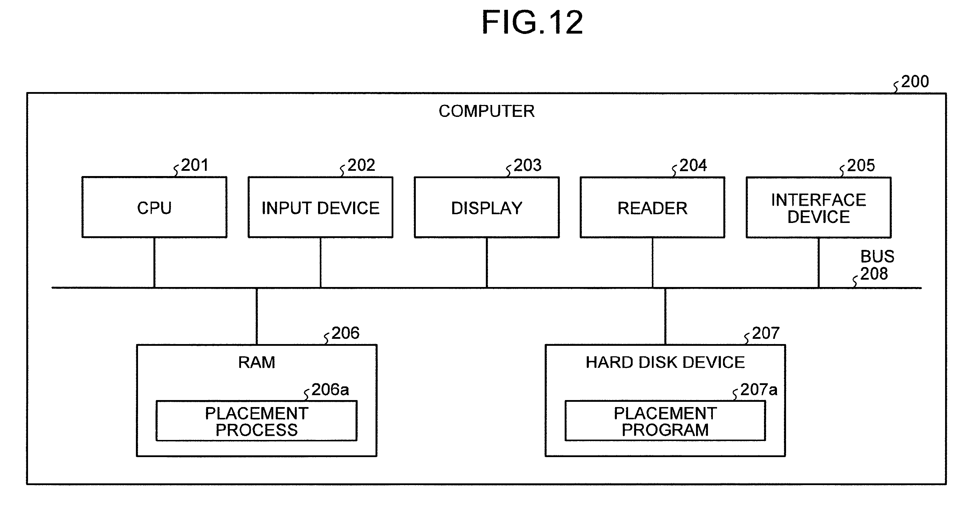

Next, an example computer will be described, which serves as an image processing device realizing similar functions to those of the search device 100 illustrated in the embodiment described above. FIG. 12 is a diagram illustrating an example computer executing a space division program.

As illustrated in FIG. 12, a computer 200 includes a CPU 201 for executing various arithmetic operations, an input device 202 for receiving data input from a user, and a display 203. The computer 200 also includes a reader 204 for reading a program from a storage medium, and an interface device 205 for exchanging data with other computers via a network. The computer 200 also includes a RAM 206 for temporarily storing various information, and a hard disk device 207. The devices 201 to 207 are connected to a bus 208.

The hard disk device 207 includes a placement program 207a. The CPU 201 reads out and extracts the program 207a onto the RAM 206. The placement program 207a functions as a placement process 206a. The placement process 206a corresponds to the placement unit 106, for example.

Note that the placement program 207a does not necessarily need to be stored in the hard disk device 207 in advance. For example, a program may be stored on a "portable physical medium", such as a flexible disk (FD), a CD-ROM, a DVD disc, a magneto-optical disc, an IC card, etc., to be inserted into the computer 200. Then, the computer 200 may read out the placement program 207a therefrom, and execute the placement program 207a.

One embodiment of the present invention provides an advantageous effect of making it possible to perform a similarity search using feature vectors with a high precision.

**Claims**

1. A space division method to be performed by a computer, the method comprising:

     specifying an intersection position of a plurality of hyper-planes such that the intersection position is present within a sphere by adjusting offset amounts of the plurality of hyper-planes, when the plurality of hyper-planes are placed so as to divide the sphere present in a space of a dimension higher than a dimension of a feature space by one dimension or more;
     initially placing the plurality of hyper-planes passing through the set intersection position; and projecting feature vectors in a feature space onto the surface of the sphere divided by the plurality of hyper-planes.

2. The space division method according to claim 1, wherein the specifying process includes specifying a single point determined by a third-order moment in an eigenvalue direction, the eigenvalue being a value of variance-covariance matrix for the feature vectors, the single point being equal to the intersection position.

3. A space division device (100) comprising a placement unit (106) arranged to specify an intersection position of a plurality of hyper-planes such that the intersection position is present within a sphere by adjusting offset amounts of the plurality of hyper-planes, when the plurality of hyper-planes are placed so as to divide a sphere present in a space of a dimension higher than a dimension of a feature space by one dimension or more, and arranged to initially place the plurality of hyper-planes passing through the set intersection position and arranged to project feature vectors in a feature space onto the surface of the sphere divided by the plurality of hyper-planes.

4. The space division device (100) according to claim 3, wherein the placement unit (106) is arranged to specify a single point determined by a third-order moment in an eigenvalue direction, the eigenvalue being a value of variance-covariance matrix for the feature vectors, the single point being equal to the intersection position.

5. A space division program that causes a computer to execute:

specifying an intersection position of a plurality of hyper-planes such that the intersection position is present within a sphere by adjusting offset amounts of the plurality of hyper-planes, when the plurality of hyper-planes are placed so as to divide the sphere present in a space of a dimension higher than a dimension of a feature space by one dimension or more;
initially placing the plurality of hyper-planes passing through the set intersection position; and projecting feature vectors in a feature space onto the surface of the sphere divided by the plurality of hyper-planes.

6. The space division program according to claim 5, wherein the specifying process includes specifying a single point determined by a third-order moment in an eigenvalue direction, the eigenvalue being a value of variance-covariance matrix for the feature vectors, the single point being equal to the intersection position.

**Patentansprüche**

1. Raumteilungsverfahren, das durch einen Computer durchzuführen ist, wobei das Verfahren aufweist:

Spezifizieren einer Schnittpunktposition mehrerer Hyperebenen, so dass die Schnittpunktposition durch Einstellen von Offsetbeträgen der mehreren Hyperebenen innerhalb einer Kugelfläche liegt, wenn die mehreren Hyperebenen derart platziert sind, dass sie die Kugelfläche aufteilen, die in einem Raum einer Dimension liegt, die um eine oder mehrere Dimensionen höher ist als eine Dimension eines Merkmalsraums;
anfängliches Platzieren der mehreren Hyperebenen, die durch die gesetzte Schnittpunktposition verlaufen; und Projizieren von Merkmalsvektoren in einem Merkmalsraum auf die Oberfläche der Kugelfläche, die durch die mehreren Hyperebenen aufgeteilt ist.

2. Raumteilungsverfahren nach Anspruch 1, wobei der Spezifizierungsvorgang ein Spezifizieren eines einzelnen Punktes aufweist, der durch ein Moment dritter Ordnung in einer Eigenwertrichtung bestimmt ist, wobei der Eigenwert ein Wert einer Varianz/Kovarianzmatrix für die Merkmalsvektoren ist, wobei der einzelne Punkt gleich der Schnittpunktposition ist.

3. Raumteilungsvorrichtung (100), aufweisend eine Platzierungseinheit (106), die dazu eingerichtet ist, durch ein Einstellen von Offsetbeträgen der mehreren Hyperebenen eine Schnittpunktposition mehrerer Hyperebenen zu spezifizieren, so dass die Schnittpunktposition innerhalb einer Kugelfläche liegt, wenn die mehreren Hyperebenen derart platziert sind, dass sie eine Kugelfläche aufteilen, die in einem Raum einer Dimension vorhanden ist, die um eine oder mehrere Dimensionen höher ist als eine Dimension eines Merkmalsraums, und die dazu eingerichtet ist, anfänglich die mehreren Hyperebenen, die durch die gesetzte Schnittpunktposition verlaufen, zu platzieren, und die dazu eingerichtet ist, Merkmalsvektoren in einem Merkmalsraum auf die Oberfläche der Kugelfläche zu projizieren, die durch die mehreren Hyperebenen aufgeteilt ist.

4. Raumteilungsvorrichtung (100) nach Anspruch 3, wobei die Platzierungseinheit (106) dazu eingerichtet ist, einen einzelnen Punkt zu spezifizieren, der durch ein Moment dritter Ordnung in einer Eigenwertrichtung bestimmt ist, wobei der Eigenwert ein Wert einer Varianz-Kovarianzmatrix für die Merkmalsvektoren ist, wobei der einzelne Punkt gleich der Schnittpunktposition ist.

5. Raumteilungsprogramm, das einen Computer veranlasst auszuführen:

Spezifizieren einer Schnittpunktposition mehrerer Hyperebenen, so dass die Schnittpunktposition innerhalb einer Kugelfläche liegt, durch Einstellen von Offsetbeträgen der mehreren Hyperebenen, wenn die mehreren Hyperebenen derart platziert sind, dass sie die Kugelfläche aufteilen, die in einem Raum einer Dimension liegt, die um eine oder mehrere Dimensionen höher ist als eine Dimension eines Merkmalsraums;
anfängliches Platzieren der mehreren Hyperebenen, die durch die gesetzte Schnittpunktposition verlaufen; und Projizieren von Merkmalsvektoren in einem Merkmalsraum auf die Oberfläche der Kugelfläche, die durch die mehreren Hyperebenen aufgeteilt ist.

6. Raumteilungsprogramm nach Anspruch 5, wobei der Spezifizierungsvorgang ein Spezifizieren eines einzelnen Punktes aufweist, der durch ein Moment dritter Ordnung in einer Eigenwertrichtung bestimmt ist, wobei der Eigenwert ein Wert einer Varianz-Kovarianzmatrix für die Merkmalsvektoren ist, wobei der einzelne Punkt gleich der Schnittpunktposition ist.

**Revendications**

1. Procédé de division d'espace destiné à être effectué par un ordinateur, le procédé comprenant :

   la spécification d'une position d'intersection d'une pluralité d'hyperplans de sorte que la position d'intersection soit présente dans une sphère en ajustant les quantités de décalage de la pluralité d'hyperplans, lorsque la pluralité d'hyperplans sont placés de manière à diviser la sphère présente dans un espace ayant une dimension supérieure à une dimension d'un espace de caractéristique d'une dimension ou plus ;
   le placement initial de la pluralité d'hyperplans passant par la position d'intersection fixée ; et
   la projection de vecteurs de caractéristique dans un espace de caractéristique sur la surface de la sphère divisée par la pluralité d'hyperplans.

2. Procédé de division d'espace selon la revendication 1, dans lequel le traitement de spécification comprend la spécification d'un point unique déterminé par un moment du troisième ordre dans une direction de valeur propre, la valeur propre étant une valeur de matrice de variance-covariance pour les vecteurs de caractéristique, le point unique étant identique à la position d'intersection.

3. Dispositif de division d'espace (100) comprenant une unité de placement (106) agencée pour spécifier une position d'intersection d'une pluralité d'hyperplans de sorte que la position d'intersection soit présente dans une sphère en ajustant les quantités de décalage de la pluralité d'hyperplans, lorsque la pluralité d'hyperplans sont placés de manière à diviser une sphère présente dans un espace ayant une dimension supérieure à une dimension d'un espace de caractéristique d'une dimension ou plus, et agencée pour placer initialement la pluralité d'hyperplans passant par la position d'intersection fixée et agencée pour projeter des vecteurs de caractéristique dans un espace de caractéristique sur la surface de la sphère divisée par la pluralité d'hyperplans.

4. Dispositif de division d'espace (100) selon la revendication 3, dans lequel l'unité de placement (106) est agencée pour spécifier un point unique déterminé par un moment du troisième ordre dans une direction de valeur propre, la valeur propre étant une valeur de matrice de variance-covariance pour les vecteurs de caractéristique, le point unique étant identique à la position d'intersection.

5. Programme de division d'espace qui amène un ordinateur à exécuter :

   la spécification d'une position d'intersection d'une pluralité d'hyperplans de sorte que la position d'intersection soit présente dans une sphère en ajustant les quantités de décalage de la pluralité d'hyperplans, lorsque la pluralité d'hyperplans sont placés de manière à diviser la sphère présente dans un espace ayant une dimension supérieur à une dimension d'un espace de caractéristique d'une dimension ou plus ;
   le placement initial de la pluralité d'hyperplans passant par la position d'intersection fixée ; et
   la projection de vecteurs de caractéristique dans un espace de caractéristique sur la surface de la sphère divisée par la pluralité d'hyperplans.

6. Programme de division d'espace selon la revendication 5, dans lequel le traitement de spécification comprend la spécification d'un point unique déterminé par un moment du troisième ordre dans une direction de valeur propre, la valeur propre étant une valeur de matrice de variance-covariance pour les vecteurs de caractéristique, le point unique étant identique à la position d'intersection.

# FIG.1

# FIG.2

| IDENTIFICATION INFORMATION | FEATURE VECTOR |
|---|---|
| 1001 | (A1, A2, ···, Am) |
| 1002 | (B1, B2, ···, Bm) |
| ··· ||

# FIG.3

| IDENTIFICATION INFORMATION | BIT STRING |
|---|---|
| 1001 | 10001010101··· |
| 1002 | 00001110101··· |
| ··· ||

# FIG.4

# FIG.5

# FIG.6

# FIG.7

# FIG.8

```
                    ┌─────────────┐
                    │    START    │
                    └─────────────┘
                           │
                           ▼
        ┌─────────────────────────────────────────┐
        │  PROCESS OF SETTING INITIAL POSITIONS OF │  ～S101
        │             HYPER-PLANES                 │
        └─────────────────────────────────────────┘
                           │
                           ▼
        ┌─────────────────────────────────────────┐
        │  GENERATE QUERY BIT STRING BY SUBJECTING │
        │    FEATURE VECTOR OF QUERY TO INVERSE     │  ～S102
        │       STEREOGRAPHIC PROJECTION           │
        └─────────────────────────────────────────┘
                           │
                           ▼
        ┌─────────────────────────────────────────┐
        │  GENERATE BIT STRING BY SUBJECTING EACH  │
        │   FEATURE VECTOR FROM FEATURE VALUE      │  ～S103
        │ STORAGE UNIT TO INVERSE STEREOGRAPHIC    │
        │              PROJECTION                  │
        └─────────────────────────────────────────┘
                           │
                           ▼
        ┌─────────────────────────────────────────┐
        │ CALCULATE HAMMING DISTANCE BETWEEN QUERY │
        │  BIT STRING AND BIT STRINGS TO SPECIFY BIT│  ～S104
        │    STRING SIMILAR TO QUERY BIT STRING    │
        └─────────────────────────────────────────┘
                           │
                           ▼
                    ┌─────────────┐
                    │     END     │
                    └─────────────┘
```

# FIG.9

START

OBTAIN SQUARE ROOT σi OF LARGEST EIGENVALUE FOR
EACH OF VARIANCE-COVARIANCE MATRICES OF FEATURE
VECTORS, AND SET LARGEST SQUARE ROOT σi AS σ — S201

SET DIRECTION OF σ TO vecN — S202

PERFORM PRINCIPAL COMPONENT ANALYSIS FOR
FEATURE VECTORS AND CALCULATE CUMULATIVE
CONTRIBUTION RATIO — S203

SPECIFY APPROXIMATE STRAIGHT LINE THAT IS OBTAINED
BY PLOTTING, WHERE HORIZONTAL AXIS REPRESENTS
NUMBER OF COMPONENTS AND VERTICAL AXIS
REPRESENTS LOGARITHMIC CUMULATIVE CONTRIBUTION
RATIO — S204

SET GRADIENT OF APPROXIMATE STRAIGHT LINE TO $\gamma+1$ — S205

SET, TO R, RADIUS OF CIRCULAR IMAGE OBTAINED BY
STEREOGRAPHIC PROJECTION OF EQUATOR OF HYPER-
SPHERE S — S206

CALCULATE c1 AND c2 — S207

DETERMINE POSITION c OF COMMON INTERSECTION TO BE
POSITION SHIFTED FROM CENTER OF HYPER-SPHERE S BY
c1 IN m+1-DIMENSIONAL DIRECTION AND BY c2 IN vecN
DIRECTION — S208

SAMPLE n NORMAL VECTORS FROM MULTI-DIMENSIONAL
STANDARD NORMAL DISTRIBUTION — S209

SET, AS INITIAL HYPER-PLANE POSITION, HYPER-PLANE
HAVING SAMPLED NORMAL VECTORS AND PASSING
THROUGH COMMON INTERSECTION — S210

END

# FIG.10

# FIG.11

```
           ┌─────────────┐
           │    START    │
           └──────┬──────┘
                  │
                  ▼
    ┌──────────────────────────────────┐
    │  SAMPLE NORMAL VECTORS AND OFFSETS│
    │  FROM STANDARD NORMAL DISTRIBUTION│ ~S301
    │  AND SPECIFY PLACEMENT OF HYPER-  │
    │            PLANES                 │
    └──────────────┬───────────────────┘
                   │
                   ▼
         ╱◇╲              S302
  YES  ╱      ╲
 ◄────◇  IS INTERSECTION PRESENT  ◇
      ╲   AT POINT AT INFINITY?   ╱
        ╲                      ╱
          ╲                  ╱
             │ NO
             ▼
         ╱◇╲              S303
       ╱      ╲
      ◇  ARE INTERSECTIONS  ◇ YES
      ╲ FORMED BY HYPER-PLANES ╱────►
       ╲ ALL PRESENT WITHIN  ╱
        ╲ HYPER-SPHERE S?   ╱
          ╲              ╱
             │ NO
             ▼
    ┌──────────────────────────────────┐
    │ SET OFFSET TO 1/2 FOR ALL HYPER-PLANES │ ~S304
    └──────────────┬───────────────────┘
                   │
                   ▼
    ┌──────────────────────────────────┐
    │  SET, AS INITIAL POSITIONS, CURRENT │ ~S305
    │     POSITIONS OF HYPER-PLANES     │
    └──────────────┬───────────────────┘
                   │
                   ▼
           ┌─────────────┐
           │     END     │
           └─────────────┘
```

# FIG.12

EP 2 890 041 B1

# FIG.13

# FIG.14

# FIG.15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 10247243 A
- JP 2012160047 A
- JP 2011100395 A
- JP 2010081251 A
- JP 2012243197 A

**Non-patent literature cited in the description**

- **JAE-PIL HEO ; YOUNGWOON LEE ; JUNFENG HE ; SHIH-FU CHANG ; SUNG-EUI YOON.** Spherical hashing. *In CVPR,* 2012, 2957-2964
- Spherical lsh for approximate nearest neighbor search on unit hyper-sphere. **KENGO TERASAWA ; YUZURU TANAKA.** Lecture Notes in Computer Science. Springer, 2007, vol. 4619, 27-38